(19) Europäisches Patentamt / European Patent Office / Office européen des brevets

(11) **EP 3 324 591 A1**

(12) **EUROPEAN PATENT APPLICATION**

(43) Date of publication:
**23.05.2018 Bulletin 2018/21**

(51) Int Cl.:
***H04L 27/26*** *(2006.01)*

(21) Application number: **16199380.3**

(22) Date of filing: **17.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Technologies Oy
02610 Espoo (FI)**

(72) Inventors:
• **FANG, Dong
Dublin, 15 (IE)**
• **GUAN, Lei
Dublin, 15 (IE)**

(74) Representative: **Mills, Julia et al
Script IP Limited
18 Bridge Street
Frome Somerset BA11 1BB (GB)**

(54) **PROCESSING MODULATED SIGNALS FOR WIRELESS TRANSMISSION BETWEEN A MOBILE NODE AND A FURTHER NODE**

(57)    A method, central processing unit and computer program are disclosed. The method comprises A method of processing at least one wireless modulated signal output by a communication device located within a vehicle, the method comprising: receiving the at least one signal from the communication device; performing on the at least one signal both an inverse Fourier transform operation to form a time domain representation of a signal and a Fourier transform operation to form a frequency domain representation of a signal, such that the at least one signal is transformed to form a two dimensional multi carrier modulated signal; and outputting the at least one processed signal to at least one antenna unit located on an outer surface of the vehicle.

FIG. 3

**Description**

FIELD OF THE INVENTION

The invention relates to the field of processing modulated signals for wireless transmission between a mobile node and a further node.

BACKGROUND

The transmission of wireless signals between a mobile node such as one within a vehicle and another node in a wireless network has its own specific problems. Broadband wireless communications with high mobility are a particular challenge, especially, where the high mobility results in significant Doppler effects which affects the observed signals over the frequencies of the RF carrier, subcarriers, envelope, and symbol timing.

Devices with high mobility may also pass quickly through the cellular coverage and hence lead to frequent handovers. For example, it only takes 6s for the China high-speed train, which usually run with speeds over 300km/h, to pass through a cell with a 500m coverage radius. As such, devices on the train have to measure the neighboring cells and implement the handover very frequently. Another issue is that the carriages of many vehicles such as high speed trains are well insulated with metallic composites and these may cause a penetration loss of about 24dB or more.

Embodiments seek to address at least some of the issues above

SUMMARY

A first aspect provides a method of processing at least one wireless modulated signal output by a communication device located within a vehicle, said method comprising: receiving said at least one signal from said communication device; performing on said at least one signal both an inverse Fourier transform operation to form a time domain representation of a signal and a Fourier transform operation to form a frequency domain representation of a signal, such that said at least one signal is transformed to form a two dimensional multi carrier modulated signal; and outputting said at least one processed signal to at least one antenna unit located on an outer surface of said vehicle.

A loss of signal quality due to channel fading is a crucial factor impacting wireless system performance. Channel fading occurs due to several factors, such as time selective fading which occurs with high speed nodes, where Doppler effects on the signal cause issues, and frequency selective fading which is a multipath effect due to different signals reaching the destination with different delays. In order to address these issues signal equalisation is required to align the delays of Doppler shifts and multipath effects at the recipient.

Where one has communication devices such as mobile phones, tablets or Internet of Things devices, within a vehicle such as a car, bus, train or drone, then the motion of the vehicle generates Doppler shifts in the transmitted signal and reduces the quality of signal received. Furthermore, the outer surface of the vehicle which is often metallic significantly decreases the strength of any transmitted signals.

The above has been addressed by embodiments, by providing a central broadband processing unit that receives signals output by one or more communication devices within the vehicle, and transmits them to an external antenna. Prior to transmitting them to the external antenna the signals are processed to make them more resistant to Doppler effects.

The processing performed on the signals is performed to address not just the time selective fading of the channel due to Doppler shifts but also the frequency selective fading due to multipath effects. In this regard applying a Fourier Transform operation such as a discrete Fourier transform to a signal provides a frequency domain representation of a signal by relating the frequency domain of the signal to a new domain termed the delay domain. While performing an inverse Fourier Transform such as an inverse discrete Fourier transform relates the time domain of a signal to a new domain termed the Doppler domain. These two transforms can be viewed as a 2D Fourier transform or Symplectic Fourier Transform. By applying these Fourier transforms, a waveform in two dimensions is generated which allow both time selective and frequency selective fading to be addressed. The Fourier transforms on the signal spread the signal across both the time and frequency domain resulting in spreading of the different effects and providing an almost constant fading and improved quality signal. This technique is termed OTFS (orthogonal time frequency space).

It should be noted that the Fourier transform processing of the signals does not require the signals to be decoded prior to this processing, the coded or modulated signals are simply further processed, thereby reducing the latency of the system compared to one where the signals were decoded prior to any further processing.

Thus, a method that receives one or more signals output by one or more devices within a vehicle is provided and which both processes the signal(s) to form a waveform resistant to Doppler and multipath effects and sends the signal(s) to an external antenna is provided, thereby addressing issues arising both from the movement of the vehicle and from its metallic outer shell.

In some embodiments, the method comprises applying at least one of a frequency domain filter and a time domain window to said signal.

One of the issues that arises with OTFS is that it requires guard-band and guard time-intervals to maintain the out-of- band emissions (OOBE) below a certain satisfactory level. The in band portion of a signal is the portion that carries the information while the spread of the portion of the signal beyond this central band does not carry useful information, may cause interference and generally degrades the quality of the signals. In this regard as the OTFS technique adopts a Symplectic Fourier transform to implement the 2D multicarrier modulation, the guard bands are unavoidably extended to 2D as well and hence spectral efficiency will be degraded. The inventors of the present invention have therefore determined that it would be advantageous to apply a filter to the signal in at least one of the Doppler domain (a frequency domain filter) and the delay domain (a time window). This removes or at least reduces signals that are out of band and reduces the need for a guard band to protect from interference from other signals.

In some embodiments the method comprises applying both a frequency domain filter and a time domain window to said signal.

Where both a frequency domain filter and a time domain window are applied to the signal, then the need for both a guard band and guard time intervals are reduced and in some cases completely avoided.

In some embodiments, said two filtering processes are applied as a single combined filter process.

Although the filtering processes may be formed as individual processes, for some embodiments they are performed as a single combined filter process which may improve the efficiency of the process and decrease the amount of hardware required. In other embodiments, filters used for conventional signalling processing such as F-OFDM (filtered orthogonal frequency division multiplexing) may be reused for this process and in such a case it may make sense to use individual filters in order to reuse existing hardware and route the signals via these filters as required.

In some embodiments, the method further comprises applying a cycle prefix to said signal prior to performing said filtering step.

Cyclic prefixes may be added to the signals to ensure that the channel effect is a circular convolution which in turn may be transformed to the frequency domain using a discrete Fourier transform (DFT). Adding the cyclic prefix should be performed before the inverse discrete Fourier transform (IDFT). The order of operation can be IDFT-CP-DFT or IDFT-DFT-CP, but in any case, CP should follow by IDFT. There should be a permutation of the resultant signal matrix between the DFT and IDFT.

In some embodiments, the method further comprises an initial step of performing serial to parallel conversion of said modulated signal to form a plurality of parallel modulated signals; said subsequent steps, prior to said transmitting step being performed on said plurality of parallel signals; and prior to transmitting said two dimensional multi carrier modulated signal performing a parallel to serial conversion of said plurality of two dimensional multi carrier modulated signals to form said two dimensional multi carrier modulated signal.

The processing steps performed in this method may be performed on a plurality of the signals arranged in parallel. This increases the speed of the processing and also allows matrix operations to be performed in a straightforward hardware and time efficient manner.

In some embodiments, the method further comprises transmitting a control signal indicative of at least one of said frequency band and time window of said at least one filter and indicative of said Fourier transform and inverse Fourier Transform operations applied to said modulated signal.

In order to aid the receiver in its task of reconstituting the original signal from the two dimensional multi-carrier modulated signal, information regarding the filters and the Fourier transform operations performed may be transmitted to the receiver via a control signal.

In some embodiments, said at least one antenna unit comprises an array of antennas each antenna unit forming a multiple input multiple output node, said method further comprising receiving and analysing velocity and localisation information relating to said vehicle and performing beam forming operations on said signal to be output by said at least one antenna unit in response to said information.

In addition to processing the signals to reduce Doppler and multipath effects, the central broadband processing unit can make use of velocity and localisation information that it may receive relating to the location and trajectory of the vehicle and use this to point any output signals in a beam directed towards a required destination such as a base station. Once again the processing of signals prior to outputting them from the vehicle can produce an improved signal quality.

In some embodiments, said signal is output to a plurality of antenna units located on an outer surface of said vehicle

The vehicle may have a plurality of antenna units and these may be used to improve the beamforming and signal quality.

In some embodiments the method further comprises: receiving a plurality of signals from a plurality of communication devices; demultiplexing said plurality of signals; and performing said processing steps on each of said demultiplexed signals; and multiplexing said plurality of two dimensional multi carrier modulated signal, prior to outputting said signals.

The method may be performed on a signal from a single device or from several devices. The ability to centrally process several signals and output them via the external antenna improves the user experience of multiple users within a vehicle. It should be noted that the processing of the signals does not require the signals to be decoded, the coded signals are simply further processed, thereby reducing latency.

A second aspect of the present invention provides a method of processing a plurality of two dimensional multi carrier modulated signals received at at least one antenna unit located on an exterior surface of a moving vehicle, said method comprising: demultiplexing said received signals to isolate signals to individual communication devices within said vehicle; for each of said isolated signals: performing an inverse Fourier transform operation and a Fourier transform operation on said two dimensional multicarrier modulated signal to convert said two dimensional multi carrier modulated signal to a modulated signal; and transmitting said modulated signal towards said communication device.

Where a two dimensional multi carrier signal has been used for wireless transmissions in order to reduce channel fading, then such a signal can be reformed into the modulated signal from which it stemmed. Where the signal is received at an antenna on an exterior of a vehicle then the signal is isolated from other signals by demultiplexing the received signals and the Fourier transform operations are performed to retrieve the original modulated signal.

In some embodiments at least one of said received two dimensional multi carrier modulated signals is received a plurality of times as a plurality of signals each transmitted from a different network node; said method further comprising performing said Fourier transform operations to generate said modulated signal for each of said multiple signals; performing joint processing of said plurality of modulated signals to suppress noise and generate a combined modulated signal.

In order to further improve signal quality and reduce the effects of the vehicle moving through cells covered by network nodes very quickly, several network nodes may each transmit the same signal. These will be received by the antenna as multiple copies of the signal and joint processing of the signals can be performed on the retrieved modulated signals to suppress noise and generate a combined modulated signal. In this way noise is reduced and frequent handover issues are also mitigated.

In some embodiments the method further comprises filtering the received signal using at least one of a time and frequency domain filter.

Using corresponding filtering techniques to those used at the transmit side improves the quality of the signal and helps reduce interference from other user equipment. In particular, the use of the filter can reduce the need for exact synchronisation between user equipment when multiple signals are sent from different user equipment as it reduces the overlap of the signals and helps in their separation.

In some embodiments said method comprises filtering said signal using both of a time domain and frequency domain filter.

In some embodiments, said method further comprises removing a cyclic prefix from said signal.

In some cases the signals may have had a cyclic prefix added to it to provide circular convolution and in such a case this will be removed.

In some embodiments said method comprises receiving control information indicative of at least one of filter characteristics, Fourier transform operations and cyclic prefix information for at least one of said received two Dimension multi carrier modulated signals.

Providing the receiver with information regarding the processing performed on the signal prior to transmission via a control signal helps the receiver to process the received signal to generate the original modulated signal.

In some embodiments, the method comprises an initial step of performing a serial to parallel conversion of said demultiplexed signal to form a plurality of parallel signals, said subsequent steps being performed on said plurality of parallel signals, said method comprising a final parallel to serial conversion step to convert said plurality of parallel modulated time frequency domain signals to a single modulated time frequency domain signal.

In some cases, each of the received demultiplexed signals will be formed into a plurality of parallel signals which will be processed in parallel. This reduces the time required to process the signals and can allow hardware efficient systems applying matrix operations on the parallel signals to be used.

A third aspect of the present invention provides a central broadband processing unit for processing at least one modulated signal output by at least communication device within a vehicle, said central broadband processing unit comprising: a receiver for receiving said at least one signal from said communication device; processing circuitry operable to perform on said at least one signal both an inverse Fourier transform operation to form a time domain representation of a signal and a Fourier transform operation to form a frequency domain representation of a signal, such that said at least one signal is transformed to form a two dimensional multi carrier modulated signal; and output circuitry operable to output said at least one processed signal to at least one antenna unit for transmission, said at least one antenna unit being located on an outer surface of said vehicle.

In some embodiments, the processing circuitry further comprises a serial to parallel converter operable to form a plurality of parallel signals from said at least one signal; said processing circuitry being operable to receive and transform said plurality of parallel signals; and parallel to serial conversion circuitry for performing a parallel to serial conversion on said plurality of signals to form a 2D multi carrier modulated signal.

In some embodiments said receiver further comprises a filter operable to filter said at least one signal in at least one of a frequency and a time domain.

In some embodiments, said receiver comprises at least one filter operable to filter said at least one signal in both of a frequency domain filter and a time domain filter.

In some embodiments, said at least one filter comprises a single filter block operable to filter said at least one signal in both of a frequency domain filter and a time domain filter.

In some embodiments said processing circuitry further comprises circuitry operable to apply a cycle prefix to said signals.

In some embodiments, said processing circuitry further comprises a control signal generator for generating a control signal indicative of at least one of said frequency band and time window of said at least one filter and indicative of said Fourier transform and inverse Fourier Transform operations applied to said modulated signal.

In some embodiments, said signal is output to a plurality of antenna units located on an outer surface of said vehicle.

In some embodiments the receiver further comprises demultiplexing circuitry for demultiplexing a plurality of signals received from a plurality of devices; and multiplexing circuitry for multiplexing a plurality of two dimensional multi carrier modulated signals generated by said processing circuitry from said plurality of demultiplexed received signals, prior to outputting said signals.

The circuitry may process signals from a single device or from several devices. The ability to centrally process several signals and output them via the external antenna improves the user experience of multiple users within a vehicle. It should be noted that the processing of the signals does not require the signals to be decoded, the coded signals are simply further processed, thereby reducing latency.

In some embodiments, the central broadband processing unit further comprises: a receiver for receiving a plurality of two dimensional multi carrier modulated signals at said at least one antenna unit; demultiplexing circuitry operable to demultiplex said received signals to isolate signals to individual communication devices within said vehicle; processing circuitry operable to perform an inverse Fourier transform operation and a Fourier transform operation on each of said demultiplexed two dimensional multicarrier modulated signal to convert said plurality of two dimensional multi carrier modulated signals to a plurality of modulated signals and to perform performing joint processing of said plurality of modulated signals to suppress noise and generate a combined modulated signal.

In some embodiments the central broadband processing unit further comprises:

joint processing circuitry for combining a plurality of copies of said modulated signals received from different network nodes to suppress noise and generate a combined modulated signal.

A fourth aspect of the present invention provides a method of centrally processing a two dimensional multicarrier modulated signal received at a plurality of network nodes, said method comprising: receiving said two dimensional multicarrier modulated signal at each of said plurality of network nodes; performing an inverse Fourier transform operation and a Fourier transform operation on each of said plurality of received two dimensional multicarrier modulated signals to convert said plurality of two dimensional multi carrier modulated signals to a plurality of modulated signals; and processing said plurality of signals to supress noise within said plurality of modulated signals and generate a combined modulated signal.

The signals output by the vehicle travelling past several network nodes may be received at more than one of the nodes and central processing of the received signals can improve signal quality. Furthermore, as OTFS techniques have been used to produce a two Dimensional multicarrier modulated signal which is resistant to Doppler and multipath effects then the central processing can allow the signal to be reconstituted to the original modulated signal which can be decoded using the standard decoding circuitry at the network nodes. As the signal is received at a plurality of network nodes joint processing of the recovered modulated signals can be performed to reduce noise effects and increase quality

In some embodiments, the method further comprises filtering said plurality of received signals using at least one of a frequency domain filter and a time domain window prior to performing said Fourier transform operations.

Filtering can be used to reduce noise form any out of band signals and to improve the quality of the signal. In preferred embodiments the signals transmitted will have been filtered prior to transmission and the use of a corresponding filter is a simple way of removing out of band signals.

In some embodiments the method further comprises filtering the received signal using at least one of a time and frequency domain filter.

Using corresponding filtering techniques to those used at the transmit side improves the quality of the signal and helps reduce interference from other user equipment. In particular, the use of the filter can reduce the need for exact synchronisation between user equipment when multiple signals are sent from different user equipment as it reduces the overlap of the signals and helps in their separation.

In some embodiments said method comprises filtering said signal using both of a time domain and frequency domain filter.

In some embodiments, said method further comprises removing a cyclic prefix from said signal.

In some cases the signals may have had a cyclic prefix added to it to provide circular convolution and in such a case this will be removed.

In some embodiments said method comprises receiving control information indicative of at least one of filter characteristics, Fourier transform operations and cyclic prefix information for at least one of said received two Dimension multi carrier modulated signals.

Providing the receiver with information regarding the processing performed on the signal prior to transmission via a control signal helps the receiver to process the received signal to generate the original modulated signal.

In some embodiments, the method further comprises: receiving velocity and localisation information relating to at least one vehicle containing at least one communication device communicating with said network nodes; determining antenna beam tracking data for said network nodes to track said at least one vehicle; and transmitting said antenna beam tracking data to said network nodes.

Where the velocity and localisation of a vehicle is known in for example a train or driverless car, then providing the central processing unit with this information allows it to determine suitable antenna beam tracking data and to forward this to the network nodes. In this way, problems that may arise due to a vehicle moving from an area of good coverage to less good coverage can be mitigated by the use of beam tracking to provide improved coverage in an area where it is predicted the vehicle will be.

In some embodiments the method further comprises transmitting communication device handover information to said network nodes in response to said velocity and localisation information.

In addition to using this information to provide beam tracking at the network nodes, this information can be used to help in the handover of devices between network nodes. One issue that arises with devices in fast moving vehicles is the frequent handover between nodes. Allowing a central control of this can aid in facilitating and making the handover more efficient, Furthermore signals can be sent from more than one node where it is determined that a communication device is nearing an edge region of a cell covered by the nodes improving signal quality and reducing the probability of signals being dropped.

A fifth aspect of the present invention provides a central signal processing unit for processing at least one two dimensional multicarrier signal received at a plurality of network nodes, said central signal processing unit comprising: a receiver for receiving a plurality of two dimensional multicarrier signals from said plurality of network nodes said plurality of two dimensional multicarrier signals comprising multiple copies of a same signal; domain transform processing circuitry operable to perform an inverse Fourier transform operation and a Fourier transform operation on said plurality of two dimensional multicarrier modulated signals to convert said plurality of two dimensional multi carrier modulated signal to a plurality of modulated time frequency domain signal.

In some embodiments, said central signal processing unit further comprises: joint signal processing circuitry for processing said plurality of modulated time frequency domain signals to supress noise within said plurality of modulated signals and generate a combined modulated signal.

A sixth aspect of the present invention provides a method of processing at least one two dimensional multicarrier signal received at a plurality of network nodes, said method comprising: receiving a plurality of two dimensional multicarrier signals from said plurality of network nodes said plurality of two dimensional multicarrier signals comprising multiple copies of a same signal; and performing an inverse Fourier transform operation and a Fourier transform operation on said plurality of two dimensional multicarrier modulated signals to convert said plurality of two dimensional multi carrier modulated signal to a plurality of modulated time frequency domain signal.

In some embodiments said method further comprises processing said plurality of modulated time frequency domain signals together to supress noise within said plurality of modulated signals and generate a combined modulated signal.

A seventh aspect of the present invention provides a computer program which when executed by a computer is operable to control said computer to perform steps in a method according to one of a first, second or fourth or sixth aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

> Figure 1 illustrates the proposed high mobility broadband transmission (HMBT) technique with central processing at the network side according to an embodiment;
> Figure 2 illustrated the proposed HMBT technique with central processing at the vehicle side according to an embodiment;
> Figure 3 schematically illustrates the circuitry at the central processing units at both the vehicle and network side;
> Figure 4 schematically shows the proposed HMBT system model as a self-dual cloud RAN (SD-C-RAN);
> Figure 5 schematically illustrates the system according to an embodiment; and
> Figure 6 schematically shows uplink signal processing in the CBPU of the train.

DESCRIPTION OF THE EMBODIMENTS

Before discussing the embodiments in any more detail, first an overview will be provided.

The existing methods of broadband wireless access on high-speed train may include 1) satellites and ground Wi-Fi repeaters covering tunnels and stations; 2) leaky coaxial cables; 3) and cellular cloud RAN (C-RAN) etc.. However, the drawbacks of these systems are clear:

> 1) The waveforms/air interfaces in the existing broadband wireless access on high-speed train are not specifically designed for high mobility. More specifically, the state of the art of OFDM/CDMA based air interface is not robust in high Doppler scenarios.
> 2) The capability of C-RAN has not been fully exploited, i.e., C-RAN is only used for increasing the cellular coverage.

The bandwidths of satellite communions and coaxial cables are limited, which result in rather low individual user throughput on the train.

The present technique, which we refer to as high mobility broadband transmissions (HMBT) for smart traffic, addresses the following main issues:

> (1) the impact of Doppler effect on broadband communications with high mobility;
> (2) cell coverage problem due to high mobility;
> (3) frequent handover between neighbouring cells due to high mobility.

In effect radio header and processing units are provided on a vehicle and can be treated as the relay function in this network MIMO paradigm, where the hotspots are deployed in the train/car so that the existing air-interface such as LTE/WIFI can be reused.

In order to address at least some of the problems associated with providing high quality communication to devices within a moving vehicle, embodiments provide a high mobility broadband transmission (HMBT) scheme, where 1) a new network infrastructure termed self-dual cloud RAN is used to provide a large coverage area while avoiding frequent handovers; and 2) a new joint processing coordinated multipoint based on two-dimensional waveform is adopted to offer the capability of joint equalization over both frequency and time domains to deal with the severe Doppler effect and multipath fading. The 2D waveform facilitates the joint frequency-and-time equalization to overcome the frequency-and-time selective fading due to the high mobility.

In effect by using a central processing unit on the vehicle associated with external antennas, signals from one or more devices within the vehicle can be received and processed to provide the modulated signal transmitted from the individual devices using conventional signaling techniques with a new 2D multicarrier modulated waveform which is resistant to channel fading due to Doppler and multipath effects. This signal can then be passed to the external antenna avoiding the attenuation of the signal that would occur were it to pass through the vehicle's outer skin.

The processing used on the signal does not require the signal to be decoded first, but simply provides a Symplectic Fourier transform operation on the modulated signal converting it to a delay and Doppler domain and allowing the fading due to Doppler and multipath effects to be reduced. This signal is then transmitted to network nodes where it is received and may in some cases be forwarded to a central broadband processing unit where it is centrally processed to reconvert the signal from a 2D multicarrier modulated signal back to the original modulated signal which can then be passed back to the network nodes for conventional decoding. In some cases the signal may be received at a plurality of network nodes in which case the central broadband processing unit may additional perform joint processing and combine the multiple copies of the signals from the different network nodes to reduce noise effects before passing them back to the network nodes for conventional decoding.

With regard to downlink signals from the network nodes to the communication devices on the vehicle, these may also be converted to a 2D multicarrier modulated signal and in some cases they are transmitted by multiple network nodes, reducing problems with frequent handovers and allowing for joint processing of the multiple signals thereby improving the quality.

Furthermore, information regarding the speed and location of the vehicle may be transmitted to the central processing unit as a control signal allowing it to direct beams towards the vehicle and transmit the signals from the appropriate node(s).

On receipt of these signals at the vehicle the signals are filtered, a Symplectic Fourier transform operation is performed and then where the same signal is received from different nodes these multiple copies of the signals are joint processed to reduce noise and generate a combined signal. All of this is performed at the central processing unit prior to forwarding the signals using conventional wireless signaling to the communication devices on the vehicle.

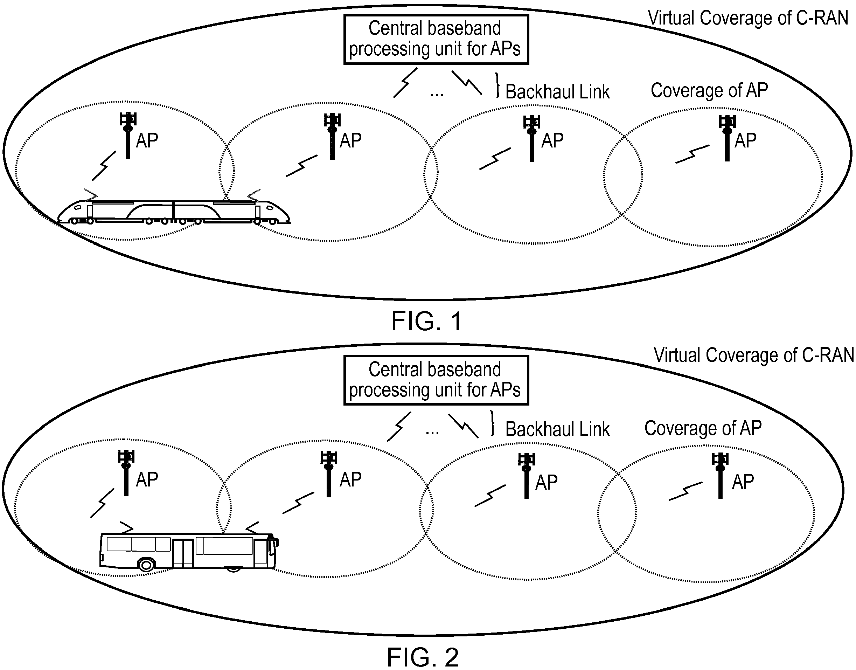

Figure 1 shows the access points (AP), which could be RRU (radio remote units), small cell base stations, WIFI routers etc., which are connected to a baseband processing unit (CBPU) so that they are able to share the localization, velocity, and common control information of the high-speed train through this interconnect structure. This paradigm enables the soft handover within the overall coverage of all APs. Meanwhile, a train is equipped with multiple radio headers, which are connected to a CBPU as well, as seen in Figure 2. As such, inside the train/car, WIFI/LTE hotspots are provided as natural extensions of cellular coverage.

The Tx (Train/Car in uplink; APs in downlink) adopts 2D filtered multicarrier (2D-FMC) waveforms where the multicarriers are generated in both the frequency and time domains using Symplectic Fourier transform operations. As such, receivers Rx (APs in uplink; Train/Car in downlink) are able to equalize the frequency-and-time selective fading in 2 dimensions jointly. The received signals at APs/radio headers of train are forwarded to the CBPU of C-RAN/train to implement the joint time-and-frequency equalization. We refer to this transmission scheme as the joint processing coordinated multipoint using 2D-FMC (2D-FMC-JP-CoMP).

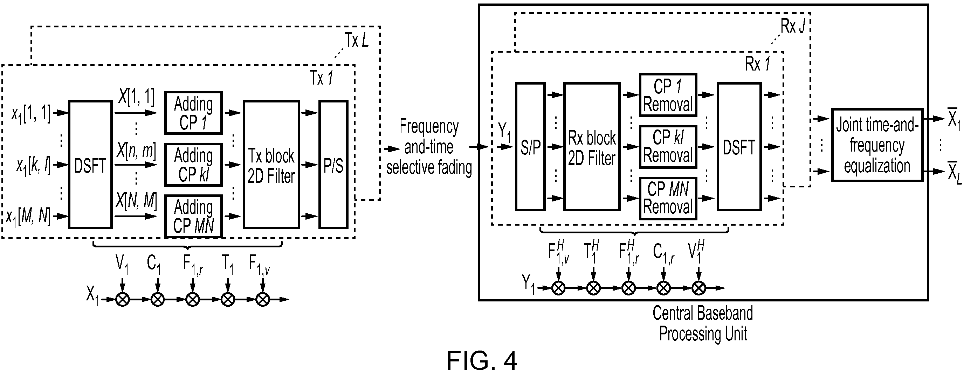

Since the 2D-FMC-JP-CoMP can be implemented in both the uplink and the downlink, all network nodes (UEs, BPCU and radio headers on the train/car, APs, BPCUs) actually form a C-RAN with duality. We refer to this as the self-dual cloud RAN (SD-C-RAN), as seen in Figure 4. SD-C-RAN can provide the multiplexing gain and diversity order as it always form a network MIMO in both the uplink and downlink.

For the high-speed train scenario, the individual route information can be preprocessed by the SD-C-RAN, which pre-calculates the antenna beam moving angle with regards to different moving speeds. Once the train is registered in the current SD-C-RAN service region for the first time, physical-layer antenna beam tracking information will be processed and allocated to the APs along the moving route.

For the sensor or network based driverless car scenarios, individual route information will be first recognized by the processing unit on the car, and then be passed to SD-C-RAN for the first time when it is registered in the current SD-C-RAN service region. Depending on the pre-defined route information, SD-C-RAN will calculate the corresponding antenna beam tracking parameters for the APs along the route, so that the driverless car will always be synchronized with SD-C-RAN and follow the optimized route calculated according to the current traffic situation within a certain region.

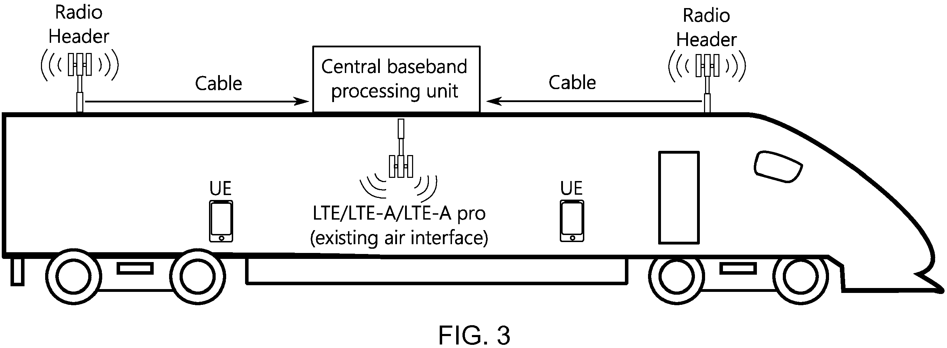

Figure 3 schematically shows the proposed system with signals being transmitted from multiple antenna radio headers. The signals are received from multiple communication devices and are processed at a central broadband processing unit and then transmitted. Tx 1,....,Tx $L$ represent the radio headers on the train; Rx 1 ,....,Rx $J$ represent the APs for the uplink. Were this to be the downlink, then the Tx would represent the APs and the Rx the antenna on the train.

Figure 3 shows the signal processing circuitry within the central broadband processing unit at the transmitter used to generate a two dimensional filtered multicarrier, 2D-FMC waveform and signal processing circuitry at the central baseband processing unit at the receiver side used to generate a modulated signal from a received 2D-FMC.

Considering the uplink scenario, a modulated signal such as a OFDM signal is received from a communication device at the central baseband processing unit on the vehicle and is converted by serial to parallel circuitry (not shown) to multiple signals in parallel in the time frequency domain x (k,l). These are processed by discrete Symplectic Fourier transform circuitry where the signals are transformed to signals X (n,m) where n denotes the time index and m the frequency bins. Cyclic prefixes are then added to the individual signals to provide circular convolution and the resulting signals are filtered. In this regard a single time window filter or a frequency domain filter may be used, but in preferred embodiments a 2D filter which provides both time domain and frequency domain filtering is used. This removes out of band signals OOB and reduces the need for guard bands or guard time intervals.

The signals are then sent to a parallel to serial converter and are then transmitted via cables to radio headers or antennas where they are transmitted wirelessly as different signals $T_{X1}$ ... $T_{XL}$. They are received at different access points represented by $R_{x1}$... $R_{xj}$ and are then forwarded to a central broadband processing unit at the network side which performs serial to parallel conversion on each of the received signals, filters them using a filter corresponding to the transmission filter, removes the cyclic prefixes and then performs the Symplectic Fourier transform operations to regenerate the original modulated signals. The plurality of received signals are then combined using joint time and frequency equalisation to combine the signals from different access points and generate a combined signal thereby removing at least some of the noise.

The operations that are performed on the signals which can be viewed as matrix operations are schematically shown below the block diagram of the processing circuitry and are explained in more detail below. The schematic diagram shows a different order of execution of the processes to that shown in the block diagrams. Owing to the nature of many of the operations performed the order in which they are performed is not important.

The schematic flow diagram of matrix operations shows an input modulated signal X having an inverse discrete Fourier transform operation performed on it, denoted by matrix Vi. This operation relates the time domain to the so-called Doppler domain which addresses the time selective fading of a channel. Cyclic prefixes are then added to the signal by matrix C1 to provide circular convolution and the signal is in this embodiment then filtered in the time domain using matrix F1,τ. A permutation of the resultant matrix is performed prior to a discrete Fourier transform operation denoted by matrix T1 which relates the frequency domain to the so-called delay domain and which address the frequency selective fading of a channel due to multipath effects being performed and the signal is then passed through a frequency filter F1,v to generate the 2D FMC signal.

The reverse matrix operations performed at the receiver after the signal has been transmitted wirelessly via a channel with properties denoted as H to generate a signal Y1 are also shown schematically as a set of matrix operations. Thus, the wirelessly transmitted signal Y1 is received and filtered in the frequency domain denoted as matrix $F^H$1,v. A discrete Fourier transform operation denoted as $T^H$1 is then performed followed by a filter $F^H$1,τ in the time domain, the removal of the cyclic prefixes C1,τ followed by an inverse discrete Fourier transform operation $V^H$1. A permutation of the resultant matrix is performed between the discrete and inverse discrete Fourier transform operation.

The details of the joint processing coordinated multipoint transmission JP-CoMP with 2D-FMC are provided in the following paragraphs.

*Proposed JP-CoMP based on 2D-FMC*

The transmission paradigm can be simplified as: $^L$Tx transmit the 2D-FMC signals to $J$ Rx, where 1) in the uplink Tx are multiple radio headers on the carriages and Rx are the multiple APs; 2) vice versa in the downlink.

The matrix interpretation of the generation of the 2D-FMC signals at the $^l$-th Tx can be represented as

$$\mathbf{X}_{l,F} = \left[ \mathbf{F}_{l,\upsilon} \mathbf{T}_l \left( \mathbf{F}_{l,\tau} \mathbf{C}_l \mathbf{V}_l \mathbf{X}_l \right)^T \right]^T, \tag{1}$$

where $\mathbf{X}_l$ represents the modulated complex symbols, whose dimension is $N \times M$; $\mathbf{V}_l$ is IFFT matrix whose dimension is $N \times N$; $\mathbf{C}_l$ is the CP matrix with a dimension of $(N + \mu) \times N$ and $\mu$ is the length of CP; $\mathbf{F}_{l,\tau}$ is the matrix of TX band pass filter whose dimension is $(N + \mu) \times (N + \mu)$; $\mathbf{T}_l$ is the FFT matrix whose dimension is $M \times M$; and $\mathbf{F}_{l,\upsilon}$ is the matrix of TX time-domain windowing with a dimension of $M \times M$; $\mathbf{X}_{l,F}$ represents the resulted 2D signals whose dimension is $M \times (N + \mu)$.

DSFT can be decomposed into a product of IFFT and FFT operations, defined as the operation of

$$T\_l * V\_l^T \tag{2}$$

As a metaplectic operator, DSFT has a special characteristic, i.e., the inverse operation of DSFT is itself:

$$\left( \text{DSFT} \right)^{-1} = \text{DSFT}. \tag{3}$$

The above properties of DSFT allow us to reuse the FFT and IFFT components in current LTE (similar to SC-FDMA) without introducing too much additional complexity.

The received signal at all $^J$ Rx can be expressed as:

$$\mathbf{Y} = \left[ \mathbf{H}_\upsilon \left( \mathbf{H}_\tau \mathbf{X}_F \right)^T \right]^T + \mathbf{N}, \tag{4}$$

where $\mathbf{Y} = \left[ \mathbf{Y}_1^T, ..., \mathbf{Y}_J^T \right]^T$ represents the Rx signal vector; $\mathbf{H}_\tau = \text{diag}(\mathbf{H}_{l,\tau}, ..., \mathbf{H}_{L,\tau})$ and $\mathbf{H}_\upsilon = \text{diag}(\mathbf{H}_{l,\upsilon}, ..., \mathbf{H}_{L,\upsilon})$ are the

coefficient matrices of frequency and time selective fading channels, respectively; $\mathbf{X}_F = \left[ \mathbf{X}_{1,F}^T, ..., \mathbf{X}_{L,F}^T \right]^T$ represents the Tx signal vector and **N** represents the noise vector.

Based on eg (1) and (4), the equivalent channels can be represented as

$$\mathbf{H}_{eqv} = \mathbf{F}_t^H \mathbf{C}_r \mathbf{V}^H \left( \mathbf{F}_\upsilon^H \mathbf{T}^H \left\{ \mathbf{H}_\nu \left[ \mathbf{H}_t \left[ \mathbf{F}_\upsilon \mathbf{T} \left( \mathbf{F}_t \mathbf{C} \mathbf{V} \right)^T \right]^T \right]^T \right\}^T \right)^T \quad (5)$$

where $\mathbf{F}_\upsilon^H$ is the matrix of RX time-domain windowing; $\mathbf{T}^H$ is the IFFT matrix; $\mathbf{F}_\upsilon^H$ is the RX band pass filter; $\mathbf{C}_r$ is the CP removal matrix; and $\mathbf{V}^H$ is the FFT matrix.

The received signals (4) are forwarded to the CBPU through the backhaul. At the CBPU, the zero-forcing (ZF) linear equalizer, which performs the multi-antenna combining across the subcarriers, can be used to suppress ICI and multi-user interference so that the transmitted signals can be recovered. As such, a filter matrix over the received signals can be computed as

$$\mathbf{W}_{zf} = \left( \mathbf{H}_{eqv}^H \mathbf{H}_{eqv} \right)^{-1} \mathbf{H}_{eqv}^H \quad (6)$$

The benefits of HMBT w.r.t. the above technique features can be summarized as follow: HMBT provides a solution of broadband communications for smart traffic in high mobility scenarios;
The SD-C-RAN structure provides a considerably large coverage to ensure soft handover for high-speed trains or driverless cars.

It enables the network MIMO paradigm in the both uplink and downlink so that the 2D-FMC-JP-CoMP can be implemented at either AP side or train side.

The existing air-interface such as LTE/WIFI can be reused since the radio header and baseband processing unit on each carriage can be treated as the relay function in this network MIMO paradigm, where the hotspots are deployed in the train/car.

The 2D waveform facilitates the joint frequency-and-time equalization to overcome the frequency-and-time selective fading due to the high mobility.

Before the transmissions, the APs report the localization, velocity, and general control information to the CBPU of these connected APs. This paradigm enables soft handover and easy cell planning within the overall coverage of this virtualized cellular network. Multiple APs are connected to the CBPU through wireless/wireline backhaul. Meanwhile, a train is equipped with multiple radio headers which are connected to the central baseband processing unit (CBPU) on the train. Each carriage hence can provide hotspots inside as a natural extension of cellular coverage. The train, UEs, APs and the CBPU all together formed the self-dual cloud RAN (SD-C-RAN). The self-duality of SD-C-RAN ensures that the 2D-FMC-JP-CoMP can be implemented in both the uplink and downlink.

As shown in Figure 4, the uplink transmissions follow the following steps:

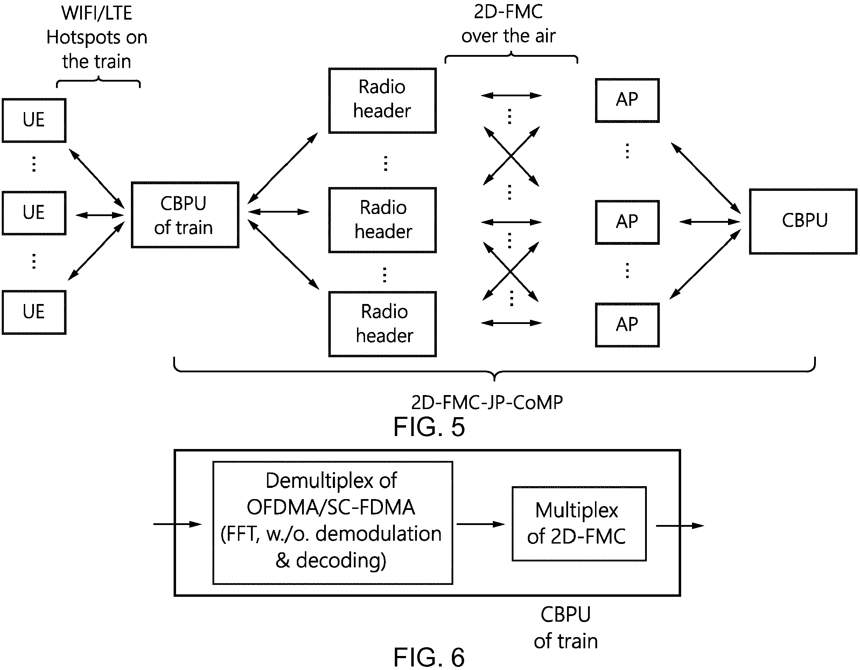

1) UEs transmit their signals to the hotspots on the train/car;
2) The CBPU of the train demultiplexes the OFDMA/SC-FDMA signals of LTE/WIFI and re-encodes the resulting signals into 2D-FMC signals. Note that after the demultiplexing of the OFDMA/SC-FDMA, as seen in Fig. 5, the CBPU of the train does not further demodulate and decode the UEs' data streams, instead, it directly re-encodes the demultiplexed signals into 2D-FMC signals. So the UEs' data streams are not pushed onto the top layers of PHY-layer for further processing. This reduces the latency;
3) The transmitted 2D-FMC signals are received by APs;
4) AP amplifies and forwards the received signals to the CBPU where the JP-CoMP with 2D-FMC is implemented.

In summary, the uplink transmission is as follows:

At the user device side:

Original signal (might be binary data) →encoding by channel codes→ modulation→OFDM encoding (could be SC-FDMA as well)

At the train side (there are several hotspots on the train):

receiving the signals at each hotspot→ OFDM decoding (removal of OFDM)→ 2D-FMC encoding→transmitting signal from train to APs.

APs receive the signals from train and forward them to CBPU.
At CBPU:

Taking joint equalization over time and frequency domains (removal of 2D-FMC and overcome multipath effects)→ demodulation→ decoding the channel codes→ recovering the original signals.

There is no demodulation and decoding of the channel codes in the train but the OFDM waveform is 'peeled off'.
Figure 5 schematically shows the uplink signal being processed at the CBPU of a vehicle in this case a train. The signals received from multiple communication devices are demultiplexed and each are processed using the processing circuitry shown on the left hand side of Figure 3, the generated 2D-FMC signals are then multiplexed and output at the different radio headers.
The downlink transmissions will follow the similar paradigm as that of the uplink:

1) The CBPU distributes data streams to each AP;
2) AP encodes the corresponding data streams into 2D-FMC signals and transmits to the radio headers of the train/car;
3) The received signals will be forwarded to the CBPU of the train/car;
4) The CBPU of the train/car implements the JP-CoMP with 2D-FMC to jointly equalize the frequency-and-time selective fading;
5) Similar to the uplink, after the joint frequency-and-time equalization, the signals are demultiplexed without demodulation and decoding. Then, the resulted signals are directly encoded into the LTE/WIFI's OFDM signals and transmitted through the hotspots.

In summary the downlink transmission is for some embodiments as follows:

CBPU generated 2D-FMC signals and APs transmitted signals received at the train. It should be noted that the 2D-FMC signals may be generated at either the CBPU of the base station or the access point. In some embodiments the CBPU simply transmits the signals over a backhaul link, such as an optical fibre or microwave link to the access points which extracts the original data and encodes it into a 2D-FMC signal.

Alternatively, the CBPU can directly generate and transmit the 2D-FMC signals and distribute them to each access point for further transmission to the user equipment.
At the train side:

receiving the signals → Taking joint equalization over time and frequency domains (removal of 2D-FMC and overcome multipath effects)→ OFDM encoding→ transmitting signal to user devices.

At user devices:

receiving the signals→ OFDM decoding → demodulation→ decoding the channel codes→ recovering the original signals.

Again, we note that there is no demodulation and decoding of the channel codes operation in the train but the 2D-FMC waveform is 'peeled off'.
We can see in uplink/downlink, the train only 'peels off' either OFDM/2D-FMC waveform and reencodes the resulted signals into 2D-FMC/OFDM. Thus, there is no demodulation and decoding of the channel codes steps. This reduces the latency and doesn't affect the standardized air-interface.
A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of processing at least one wireless modulated signal output by a communication device located within a vehicle, said method comprising:

   receiving said at least one signal from said communication device;
   performing on said at least one signal both an inverse Fourier transform operation to form a time domain representation of a signal and a Fourier transform operation to form a frequency domain representation of a signal, such that said at least one signal is transformed to form a two dimensional multi carrier modulated signal; and
   outputting said at least one processed signal to at least one antenna unit located on an outer surface of said vehicle.

2. A method according to claim 1, said method further comprising:

   applying at least one of a frequency domain filter and a time domain window to said signal following at least one of said Fourier transform operations.

3. A method according to any preceding claim, wherein said at least one antenna unit comprises an array of antennas each antenna unit forming a multiple input multiple output node, said method further comprising receiving and analysing velocity and localisation information relating to said vehicle and performing beam forming operations on said signal to be output by said at least one antenna unit in response to said information.

4. A method according to any preceding claim, comprising:

   receiving a plurality of signals from a plurality of communication devices;
   demultiplexing said plurality of signals; and
   performing said processing steps on each of said demultiplexed signals; and

multiplexing said plurality of two dimensional multi carrier modulated signal, prior to outputting said signals.

5. A method of processing a plurality of two dimensional multi carrier modulated signals received at at least one antenna unit located on an exterior surface of a moving vehicle, said method comprising:

demultiplexing said received signals to isolate signals to individual communication devices within said vehicle;
for each of said isolated signals:

performing an inverse Fourier transform operation and a Fourier transform operation on said two dimensional multicarrier modulated signal to convert said two dimensional multi carrier modulated signal to a modulated signal; and
transmitting said modulated signal towards said communication device.

6. A method according to claim 5, wherein at least one of said received two dimensional multi carrier modulated signals is received a plurality of times as a plurality of signals each transmitted from a different network node; said method further comprising
performing said Fourier transform operations to generate said modulated signal for each of said multiple signals;
performing joint processing of said plurality of modulated signals to suppress noise and generate a combined modulated signal.

7. A central broadband processing unit for processing at least one modulated signal output by at least one communication device within a vehicle, said central broadband processing unit comprising:

a receiver for receiving said at least one signal from said communication device;
processing circuitry operable to perform on said at least one signal both an inverse Fourier transform operation to form a time domain representation of a signal and a Fourier transform operation to form a frequency domain representation of a signal, such that said at least one signal is transformed to form a two dimensional multi carrier modulated signal; and
output circuitry operable to output said at least one processed signal to at least one antenna unit for transmission, said at least one antenna unit being located on an outer surface of said vehicle.

8. A central broadband processing unit according to claim 7, further comprising:

a receiver for receiving a plurality of two dimensional multi carrier modulated signals at said at least one antenna unit
demultiplexing circuitry operable to demultiplex said received signals to isolate signals to individual communication devices within said vehicle;
processing circuitry operable to perform an inverse Fourier transform operation and a Fourier transform operation on each of said demultiplexed two dimensional multicarrier modulated signal to convert said plurality of two dimensional multi carrier modulated signals to a plurality of modulated signals and to perform performing joint processing of said plurality of modulated signals to suppress noise and generate a combined modulated signal.

9. A method of centrally processing a two dimensional multicarrier modulated signal received at a plurality of network nodes, said method comprising:

receiving said two dimensional multicarrier modulated signal as a plurality of signals from said plurality of network nodes;
performing an inverse Fourier transform operation and a Fourier transform operation on each of said plurality of two dimensional multicarrier modulated signals to convert said plurality of two dimensional multi carrier modulated signal to a plurality of modulated signals; and
processing said plurality of signals to supress noise within said plurality of modulated signals and generate a combined modulated signal.

10. A method according to claim 9, comprising:

filtering said plurality of received signals using at least one of a frequency domain filter and a time domain window prior to performing said Fourier transform operations.

**11.** A method according to any one of claims 9 or 10, further comprising:

receiving velocity and localisation information relating to at least one vehicle containing at least one communication device communicating with said network nodes;
determining antenna beam tracking data for said network nodes to track said at least one vehicle; and
transmitting said antenna beam tracking data to said network nodes.

**12.** A method according to claim 11, further comprising transmitting communication device handover information to said network nodes in response to said velocity and localisation information.

**13.** A central signal processing unit for processing at least one two dimensional multicarrier signal received at a plurality of network nodes, said central signal processing unit comprising:

a receiver for receiving a plurality of two dimensional multicarrier signals from said plurality of network nodes, said plurality of two dimensional multicarrier signals comprising multiple copies of a same signal;
domain transform processing circuitry operable to perform an inverse Fourier transform operation and a Fourier transform operation on said plurality of two dimensional multicarrier modulated signals to convert said plurality of two dimensional multi carrier modulated signal to a plurality of modulated time frequency domain signal.

**14.** A central signal processing unit according to claim 13, said central signal processing unit further comprising: joint signal processing circuitry for processing said plurality of modulated time frequency domain signals to supress noise within said plurality of modulated signals and generate a combined modulated signal.

**15.** A computer program which when executed by a computer is operable to control said computer to perform a method according to any one of claims 1 - 6 or 9 - 12.

FIG. 1

FIG. 2

EP 3 324 591 A1

Radio
Header

(((· 📶 ·)))

Cable → 

Central baseband
processing unit

← Cable

Radio
Header

(((· 📶 ·)))

UE

📱

LTE/LTE-A/LTE-A pro
(existing air interface)

UE

📱

FIG. 3

FIG. 4

WIFI/LTE
Hotspots on
the train

2D-FMC
over the air

UE

UE

UE

CBPU
of train

Radio
header

Radio
header

Radio
header

AP

AP

AP

CBPU

2D-FMC-JP-CoMP

FIG. 5

Demultiplex of
OFDMA/SC-FDMA
(FFT, w./o. demodulation
& decoding)

Multiplex
of 2D-FMC

CBPU
of train

FIG. 6

Europäisches
Patentamt

European
Patent Office

Office européen
des brevets

**EUROPEAN SEARCH REPORT**

Application Number

EP 16 19 9380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COHERE TECHNOLOGIES: "Performance evaluation of OTFS waveform in single user scenarios", 3GPP DRAFT; R1-167593 PERFORMANCE EVALUATION OF OTFS IN SINGLE USER SCENARIOS-AM, 3RD GENERATION PARTNERSHIP PROJECT (3GPP), MOBILE COMPETENCE CENTRE ; 650, ROUTE DES LUCIOLES ; F-06921 SOPHIA-ANTIPOL , no. Gothenburg, Sweden; 20160822 - 20160826 13 August 2016 (2016-08-13), XP051142585, Retrieved from the Internet: URL:http://www.3gpp.org/ftp/tsg_ran/WG1_RL 1/TSGR1_86/Docs/ [retrieved on 2016-08-13] * page 1 - page 5 * ----- | 1-15 | INV. H04L27/26 |
| X | HUI GAO ET AL: "A QoS-guaranteed resource scheduling algorithm in high-speed mobile convergence network", WIRELESS COMMUNICATIONS AND NETWORKING CONFERENCE WORKSHOPS (WCNCW), 2013 IEEE, IEEE, 7 April 2013 (2013-04-07), pages 45-50, XP032679966, DOI: 10.1109/WCNCW.2013.6533313 ISBN: 978-1-4799-0109-8 [retrieved on 2013-06-14] * page 45 - page 50 * ----- | 1-12,14, 15 | **TECHNICAL FIELDS SEARCHED (IPC)** H04L |

-/--

The present search report has been drawn up for all claims

| Place of search | Date of completion of the search | Examiner |
|---|---|---|
| Berlin | 2 May 2017 | González Gutiérrez |

EPO FORM 1503 03.82 (P04C01)

Europäisches
Patentamt

European
Patent Office

Office européen
des brevets

# EUROPEAN SEARCH REPORT

Application Number

EP 16 19 9380

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | COHERE TECHNOLOGIES ET AL: "OTFS Modulation Waveform and Reference Signals for New RAT", 3GPP DRAFT; R1-163619 OTFS WAVEFORM FOR NEW RAT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, South Korea; 20160411 - 20160415 18 April 2016 (2016-04-18), XP051090363, Retrieved from the Internet: URL:http://www.3gpp.org/ftp/tsg_ran/WG1_RL1/TSGR1_84b/Docs/ [retrieved on 2016-04-18] * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Berlin | 2 May 2017 | González Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)